# EUROPEAN PATENT APPLICATION

(11) **EP 2 884 442 A1**
(43) Date of publication of application: **17.06.2015**
(21) Application number: 14195959.3
(22) Date of filing: 02.12.2014
(51) Int. Cl.: G06Q 20/20, G07F 7/10, G07F 19/00, G06F 21/83, G06F 21/84, G06F 21/60

(54) **Point of sale system**

(30) Priority: 11.12.2013 US 201314103298
(71) Applicant: VeriFone, Inc., San Jose CA 95110 (US)
(72) Inventor: Madden, Chris Anthony, Stepaside, Co. Dublin (IE); Ong Hock Meng, Sebastian, 151003 Singapore (SG); Tang, Geok Peng, 650623 Singapore (SG)
(74) Representative: Evens, Paul Jonathan

(57) **Abstract**

A point of sale system including a display subsystem (110) including a viewable display array (102) having multiple controllable display locations being operative to display non-trusted display content and trusted display content and a trusted/non-trusted display content controller (120) operative to govern operation of the display subsystem (110) and thereby to selectably allow a portion of the non-trusted display content from a non-trusted display content source to be viewed, at at least one display location on the viewable display array, which at least one display location is selected by the trusted/non-trusted content controller, without the trusted/non-trusted content controller (120) needing to have knowledge of the non-trusted display content, to be incapable of enabling malicious content, forming part of the non-trusted display content, to be readably displayed, which could lead to unauthorized entry of confidential information by a user.

## Description

### FIELD OF THE INVENTION

The present invention relates to point of sale systems generally.

### BACKGROUND OF THE INVENTION

Various types of point of sale systems are known and include displays.

### SUMMARY OF THE INVENTION

The present invention seeks to provide an improved point of sale system.

There is thus provided in accordance with a preferred embodiment of the present invention a point of sale system including a display subsystem including a viewable display array having multiple controllable display locations being operative to display non-trusted display content and trusted display content and a trusted/non-trusted display content controller operative to govern operation of the display subsystem and thereby to selectably allow a portion of the non-trusted display content from a non-trusted display content source to be viewed, at at least one display location on the viewable display array, which at least one display location is selected by the trusted/non-trusted content controller, without the trusted/non-trusted content controller needing to have knowledge of the non-trusted display content, to be incapable of enabling malicious content, forming part of the non-trusted display content, to be readably displayed, which could lead to unauthorized entry of confidential information by a user.

Preferably, the point of sale system also includes a secure payment interaction subsystem operative to securely process payment transaction data and including data input functionality and secure processing functionality and the display subsystem cooperates with the secure payment interaction subsystem. Additionally or alternatively, the trusted/non-trusted display content controller provides the secure processing functionality.

In accordance with a preferred embodiment of the present invention the viewable display array has touch screen functionality and the at least one display location is incapable of enabling a keypad to be displayed thereon. Additionally, the touch screen functionality includes PINpad functionality.

Preferably, the viewable display array has touch screen functionality and the trusted/non-trusted display content controller operates in at least two of the following three distinct modes of operation: a secure mode of operation in which the non-trusted display content does not appear on the viewable display array, a non-secure mode of operation in which the non-trusted display content appears on the viewable display array and the touch screen functionality of the viewable display array is disabled and a mixed mode of operation in which both the trusted display content and the non-trusted display content appear on the viewable display array at locations controlled by the trusted/non-trusted display content controller.

In accordance with a preferred embodiment of the present invention the trusted/non-trusted display content controller decides at multiple times whether trusted or non-trusted content is to be displayed at every location on the viewable display array at the multiple times.

Preferably, the display subsystem also includes a selectably transparent bitmap overlay overlying the viewable display array, the selectably transparent bitmap overlay being under the total control of the trusted/non-trusted display content controller and being operative to prevent locations on the viewable display array, other than at least one location selected by the trusted/non-trusted display content controller, from being viewed.

In accordance with a preferred embodiment of the present invention the display subsystem includes a video switch receiving the trusted display content for display from the trusted/non-trusted display content controller and receiving non-trusted display content for display from the non-trusted display content source and providing a feed to the viewable display array and the trusted/non-trusted display content controller provides a video switch control input to the video switch which controls the content to be displayed at the multiple controllable display locations on the viewable display array, the trusted/non-trusted display content controller being operative to decide whether trusted or non-trusted content is to be displayed at every one of the multiple controllable display locations at any given time.

Preferably, the display subsystem includes switching functionality, receiving the trusted display content for display from the trusted/non-trusted display content controller and receiving non-trusted display content for display from the non-trusted display content source and providing a feed to the viewable display array and the trusted/non-trusted display content controller includes control functionality providing a control input which controls the content to be displayed at the multiple controllable display locations on the viewable display array, the control functionality being operative to decide whether trusted or non-trusted content is to be displayed at every one of the multiple controllable display locations at any given time.

There is also provided in accordance with another preferred embodiment of the present invention a point of sale system including a display subsystem including a viewable display array having multiple controllable display locations being operative to display non-trusted display content and trusted display content, a secure payment interaction subsystem operative to securely process payment transaction data and including data input functionality and secure processing functionality, the display subsystem cooperating with the secure payment interaction subsystem and a trusted/non-trusted display content controller operative to govern operation of the display subsystem and thereby to selectably allow a portion of the non-trusted display content from a non-trusted display content source to be viewed, at at least one display location on the viewable display array, the trusted/non-trusted display content controller also providing the secure processing functionality, the trusted/non-trusted display content controller operating in at least two of the following three distinct modes of operation: a secure mode of operation in which the non-trusted display content does not appear on the viewable display array, a non-secure mode of operation in which the non-trusted display content appears on the display and the data input functionality is disabled and a mixed mode of operation in which both the trusted display content and the non-trusted display content appear on the viewable display array at locations controlled by the trusted/non-trusted display content controller.

Preferably, the viewable display array has touch screen functionality and the at least one display location is incapable of enabling a keypad to be displayed thereon in at least the mixed mode. Additionally or alternatively, the viewable display array has PINpad touch screen functionality and the at least one display location is incapable of enabling a keypad to be displayed thereon in at least the mixed mode.

In accordance with a preferred embodiment of the present invention the viewable display array has touch screen functionality and the at least one display location is incapable of enabling a keypad to be displayed thereon. Additionally, the touch screen functionality includes PINpad functionality.

Preferably, the trusted/non-trusted display content controller decides at multiple times whether trusted or non-trusted content is to be displayed at every location on the viewable display array at the multiple times.

In accordance with a preferred embodiment of the present invention the viewable display array includes a lower display array and a selectably transparent bitmap overlay overlying the lower display array, the selectably transparent bitmap overlay being under the control of the trusted/non-trusted display content controller and being operative to prevent locations on the viewable display array, other than at least one location selected by the trusted/non-trusted display content controller, from being viewed.

Preferably, the display subsystem includes switching functionality, receiving the trusted display content for display from the trusted/non-trusted display content controller and receiving non-trusted display content for display from the non-trusted display content source and providing a feed to the viewable display array and the trusted/non-trusted display content controller includes control functionality providing a control input which controls the content to be displayed at the multiple controllable display locations on the viewable display array, the control functionality being operative to decide whether trusted or non-trusted content is to be displayed at every one of the multiple controllable display locations at any given time.

There is further provided in accordance with yet another preferred embodiment of the present invention a point of sale system including a display subsystem including a viewable display array having multiple controllable display locations being operative to display non-trusted display content and trusted display content and a trusted/non-trusted display content controller operative to govern operation of the display subsystem and thereby to selectably allow a portion of the non-trusted display content from a non-trusted display content source to be viewed at at least one display location on the viewable display array, the display subsystem including switching functionality, receiving the trusted display content for display from the trusted/non-trusted display content controller and receiving non-trusted display content for display from the non-trusted display content source and providing a feed to the viewable display array and the trusted/non-trusted display content controller including control functionality providing a control input which controls the content to be displayed at the multiple controllable display locations on the viewable display array, the control functionality being operative to decide whether trusted or non-trusted content is to be displayed at every one of the multiple controllable display locations at any given time.

Preferably, the point of sale system also includes a secure payment interaction subsystem operative to securely process payment transaction data and including data input functionality and secure processing functionality and the display subsystem cooperates with the secure payment interaction subsystem. Additionally or alternatively, the trusted/non-trusted display content controller also provides the secure processing functionality.

In accordance with a preferred embodiment of the present invention the viewable display array has touch screen functionality and the at least one display location is incapable of enabling a keypad to be displayed thereon. Additionally, the touch screen functionality includes PINpad functionality.

Preferably, the viewable display array has touch screen functionality and the trusted/non-trusted display content controller operates in at least two of the following three distinct modes of operation: a secure mode of operation in which the non-trusted display content does not appear on the viewable display array, a non-secure mode of operation in which the non-trusted display content appears on the viewable display array and the touch screen functionality of the viewable display array is disabled and a mixed mode of operation in which both the trusted display content and the non-trusted display content appears on the viewable display array at locations controlled by the trusted/non-trusted display content controller.

In accordance with a preferred embodiment of the present invention the trusted/non-trusted display content controller decides at multiple times whether trusted or non-trusted content is to be displayed at every location on the viewable display array at the multiple times.

Preferably, the display subsystem includes a video switch receiving the trusted display content for display from the trusted/non-trusted display content controller and receiving non-trusted display content for display from the non-trusted display content source and providing a feed to the viewable display array and the trusted/non-trusted display content controller provides a video switch control input to the video switch which controls the content to be displayed at the multiple controllable display locations on the viewable display array, the trusted/non-trusted display content controller being operative to decide whether trusted or non-trusted content is to be displayed at every one of the multiple controllable display locations at any given time.

There is yet further provided in accordance with still another preferred embodiment of the present invention a point of sale system including a display subsystem including a viewable display array having multiple controllable display locations being operative to display non-trusted display content and trusted display content and a trusted/non-trusted display content controller operative to govern operation of the display subsystem and thereby to selectably allow a portion of the non-trusted display content from a non-trusted display content source to be viewed, at at least one display location on the viewable display array, the display subsystem including a selectably transparent bitmap overlay display overlying a lower display array, the selectably transparent bitmap overlay being under the total control of the trusted/non-trusted display content controller and being operative to prevent locations on the viewable display array, other than at least one location selected by the trusted/non-trusted display content controller, from being viewed.

Preferably, the point of sale system also includes a secure payment interaction subsystem operative to securely process payment transaction data and including data input functionality and secure processing functionality and the display subsystem cooperates with the secure payment interaction subsystem. Additionally or alternatively, the trusted/non-trusted display content controller also provides the secure processing functionality.

In accordance with a preferred embodiment of the present invention the viewable display array has touch screen functionality and the at least one display location is incapable of enabling a keypad to be displayed thereon. Additionally, the touch screen functionality includes PINpad functionality.

Preferably, the viewable display array has touch screen functionality and the trusted/non-trusted display content controller operates in at least two of the following three distinct modes of operation: a secure mode of operation in which the non-trusted display content does not appear on the viewable display array, a non-secure mode of operation in which the non-trusted display content appears on the viewable display array and the touch screen functionality of the viewable display array is disabled and a mixed mode of operation in which both the trusted display content and the non-trusted display content appears on the viewable display array at locations controlled by the trusted/non-trusted display content controller.

In accordance with a preferred embodiment of the present invention the trusted/non-trusted display content controller decides at multiple times whether trusted or non-trusted content is to be displayed at every location on the viewable display array at the multiple times.

Preferably, the display subsystem includes a video switch receiving the trusted display content for display from the trusted/non-trusted display content controller and receiving non-trusted display content for display from the non-trusted display content source and providing a feed to the viewable display array and the trusted/non-trusted display content controller provides a video switch control input to the video switch which controls the content to be displayed at the multiple controllable display locations on the viewable display array, the trusted/non-trusted display content controller being operative to decide whether trusted or non-trusted content is to be displayed at every one of the multiple controllable display locations at any given time.

In accordance with a preferred embodiment of the present invention the selectably transparent bitmap overlay display has touch screen functionality and the at least one display location is incapable of enabling a keypad to be displayed thereon.

### BRIEF DESCRIPTION OF THE DRAWINGS

The present invention will be understood and appreciated more fully from the following detailed description, taken in conjunction with the drawings in which:
Fig. 1 is a simplified block diagram illustration of a point of sale system constructed and operative in accordance with a preferred embodiment of the present invention;
Fig. 2 is a simplified block diagram illustration of a part of a point of sale system constructed and operative in accordance with a preferred embodiment of the present invention and including a selectably transparent bitmap display overlay;
Fig. 3 is a simplified block diagram illustration of a part of a point of sale system constructed and operative in accordance with a preferred embodiment of the present invention and including a securely controlled video switch;
Fig. 4 is a simplified flowchart illustrating operation of the point of sale system of Fig. 2;
Fig. 5 is a simplified flowchart illustrating operation of the point of sale system of Fig. 3;
Fig. 6 is a simplified illustration of the generation of a displayed image in the embodiment of Figs. 2 and 4 in mixed-mode operation;
Fig. 7 is a simplified illustration of the generation of a displayed image in the embodiment of Figs. 3 and 5 in mixed-mode operation; and
Fig. 8 is a simplified illustration of an exemplary display screen produced by the system in the mixed-mode and method of a preferred embodiment of the present invention.

### DETAILED DESCRIPTION OF PREFERRED EMBODIMENTS

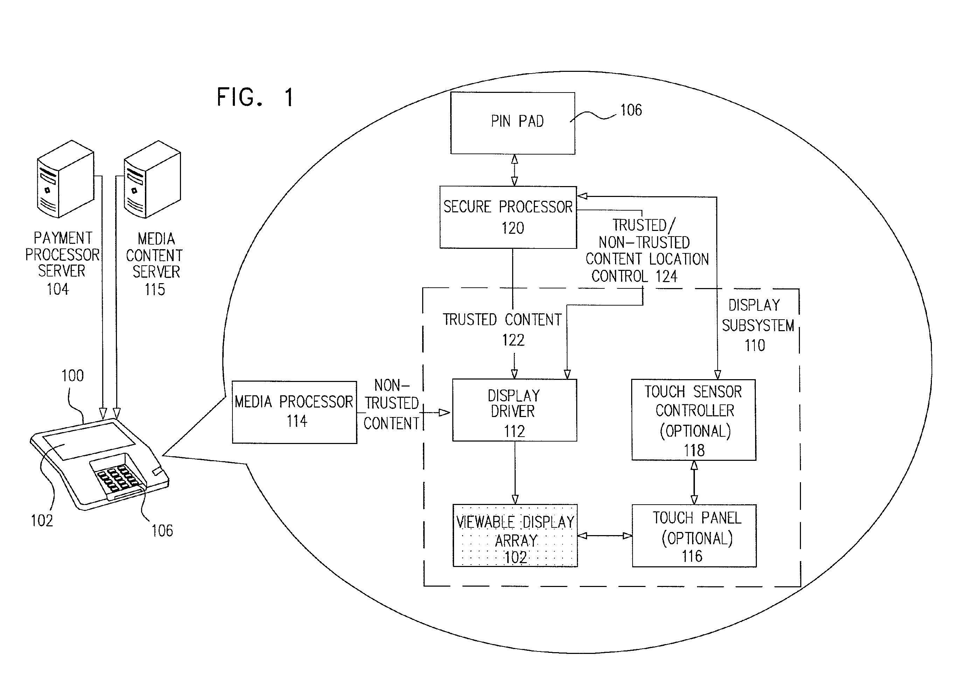

Reference is now made to Fig. 1, which is a simplified block diagram illustration of a point of sale system constructed and operative in accordance with a preferred embodiment of the present invention.

As seen in Fig. 1, the point of sale system preferably comprises a point of sale device 100, which may be any suitable point of sale device. The device shown is a VeriFone MX 925, which includes a relatively large viewable display array 102, such as an LCD, integrated therewith in a single housing, and an integrated keypad 106, preferable a secure PIN Pad for manual entry of a Personal Identification Number (PIN). It is appreciated that alternatively, the point of sale device 100 and the PIN Pad may be in separate housings, such as in the VeriFone MX 870 and PINPad 1000.

The point of sale device 100 communicates with a payment financial processor server 104 for effecting payment transactions.

The viewable display array 102 forms part of a display subsystem 110, which typically includes a display driver 112, which receives a non-trusted content input from a media processor 114, which typically receives non-trusted content from an external media content source, such as a media content server 115.

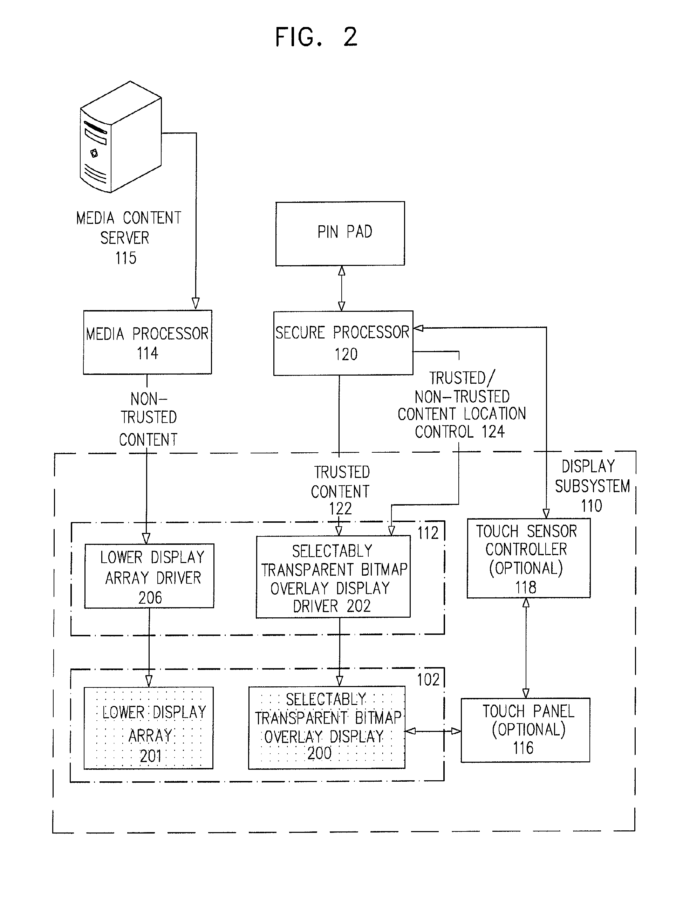

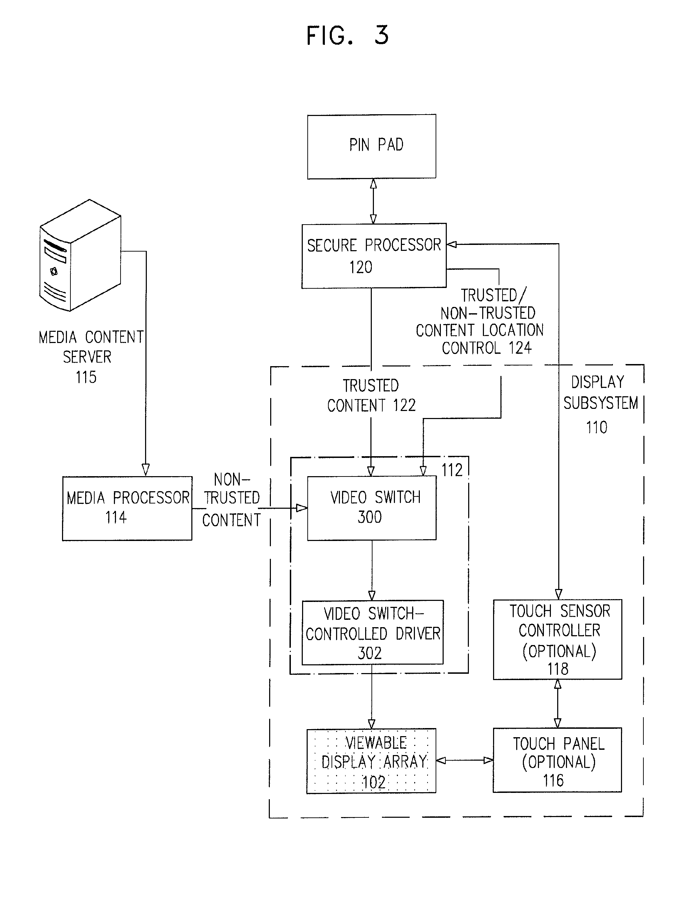

Depending on the embodiment, the viewable display array 102 may include two display elements, a lower display array and a separate selectably transparent bitmap overlay display (not shown) overlying the lower display array. In such a case, as described hereinbelow with reference to Fig. 2, the display driver 112 includes two drivers: a selectably transparent bitmap driver and a lower display driver. In another embodiment, the display driver 112 may also include a video switch, as described hereinbelow with reference to Fig. 3.

Typically, but not necessarily, the display subsystem 110 has touch screen functionality and thus includes a touch panel 116, underlying or overlapping the viewable display array 102, which communicates with a touch sensor controller 118.

In accordance with a preferred embodiment of the present invention, a secure processor 120, such as a Model BCM 5891 Secure Applications Processor commercially available from Broadcom, 5300 California Avenue, Irvine, California, USA 92617, controls the operation of the point of sale device 100 and also controls the operation of at least part of the display subsystem 110 and thus functions as a trusted/non-trusted display content controller. In such a case, it is appreciated that the trusted/non-trusted display content controller also provides secure processing functionality.

Alternatively, separate secure processors may be employed for control of the point of sale device 100, providing secure processing functionalilty, and the display subsystem 110, providing trusted/non-trusted display content control functionality. It is appreciated that one or more non-secure processors may be additionally employed for control of non-secure functionalities of the point of sale device 100.

It is a particular feature of the present invention that the secure processor 120 selectably allows non-trusted display content to be viewed, at at least one display location on the viewable display array 102, which at least one location is selected by the secure processor 120, without the secure processor 120 needing to have knowledge of the non-trusted display content. The at least one location is preferably selected by the secure processor to make it difficult or impossible for malicious content, forming part of the non-trusted display content, to be readably displayed. One example of such malicious content is a malicious prompt, such as "ENTER YOUR PIN", which could lead to entry of confidential information by a user on the keypad 106 or the touch panel 116 in a non-secure manner, enabling such confidential information to reach unauthorized entities.

The secure processor 120 preferably has two functions with respect to the display subsystem 110, in addition to whatever functions it may have in the point of sale device 102. These two functions include:
providing trusted content to be displayed by the display subsystem 110; and
controlling at which locations on the viewable display array non-trusted content may be viewed by a user.

Accordingly, the secure processor 120 provides a trusted content video display output 122 to the display driver 112 and a trusted/non-trusted content location control output 124 to the display driver 112, which controls at which locations on the viewable display array 102 non-trusted content may be viewed by a user.

Reference is now made to Fig. 2, which is a simplified block diagram illustration of a part of a point of sale system constructed and operative in accordance with a preferred embodiment of the present invention and including a selectably transparent bitmap display overlay.

In the embodiment of Fig. 2, the viewable display array 102 also includes a separate selectably transparent bitmap overlay display 200, such as a selectably transparent LCD, and a lower display array 201. Typically, but not necessarily, the display subsystem 110 has touch screen functionality.

In accordance with a preferred embodiment of the present invention, secure processor 120, such as a Model BCM 5891 Secure Applications Processor commercially available from Broadcom, 5300 California Avenue, Irvine, California, USA 92617, controls the operation of the point of sale device 100 and also controls the operation of the selectably transparent bitmap overlay display 200. Alternatively, separate secure processors may be employed for control of the point of sale device 100 and the selectably transparent bitmap overlay display 200.

It is a particular feature of the present invention that the secure processor 120 selectably allows non-trusted display content to be viewed, at at least one display location on the viewable display array 102, by controlling the locations at which the selectably transparent bitmap overlay display 200 is transparent. In this embodiment, the lower display array 201, which is overlaid by the selectably transparent bitmap overlay display 200, may be controlled by the media processor 114 without involvement of the secure processor 120 and thus displays non-trusted content.

It is thus appreciated that in this way the locations at which non-trusted content is displayed are selected by the secure processor 120, without the secure processor 120 having knowledge of the non-trusted display content. The locations are preferably selected by the secure processor to make it difficult or impossible for malicious content, forming part of the non-trusted display content, to be displayed. One example of such malicious content is a malicious prompt, such as "ENTER YOUR PIN", which could lead to entry of confidential information by a user on the keypad 106 or the touch panel 116 in a non-secure manner, enabling such confidential information to reach unauthorized entities.

The secure processor 120 preferably has two functions with respect to the display subsystem 110, in addition to whatever functions it may have in the point of sale device 102. These two functions include:
providing trusted content to be displayed by the selectably transparent bitmap overlay 200; and
controlling at which locations the selectably transparent bitmap overlay 200 is selectably transparent and thus controlling which locations on the viewable display array can be viewed at any given time, thereby allowing non-trusted content at those locations to be viewed by a user.

Accordingly, the secure processor 120 provides a trusted content output 122 to a selectably transparent bitmap overlay driver 202 and a non-trusted content location control output 124 to the selectably transparent bitmap overlay display driver 202, which controls the operation of the selectably transparent bitmap display 200, thereby controlling at which locations on the viewable display array 102, non-trusted content may be viewed by a user. The non-trusted content is supplied by media processor 114 to a lower display array driver 206 which supplies the non-trusted content to lower display array 201.

Reference is now made to Fig. 3, which is a simplified block diagram illustration of a part of a point of sale system constructed and operative in accordance with a preferred embodiment of the present invention and including a securely controlled video switch.

In the embodiment of Fig. 3, the display driver 112 (Fig. 1) includes a video switch 300, such as a XC6SLX25, commercially available from Xilinx Inc., 2100 Logic Drive, San Jose, CA 95124 U.S.A. and a video switch-controlled driver 302.

Typically, but not necessarily, the display subsystem 110 has touch screen functionality.

In accordance with a preferred embodiment of the present invention, secure processor 120, such as a Model BCM 5891 Secure Applications Processor commercially available from Broadcom, 5300 California Avenue, Irvine, California, USA 92617, controls the operation of the point of sale device 100 and also controls the operation of the video switch 300. Alternatively, separate secure processors may be employed for control of the point of sale device 100 and the video switch 300.

It is a particular feature of the present invention that the secure processor 120 selectably allows non-trusted display content to be viewed, at at least one display location on the viewable display array 102, by controlling the locations at which the video switch 300 causes non-trusted content to be displayed and the locations at which the video switch 300 causes trusted content to be displayed.

In this embodiment, the video switch 300 receives non-trusted content from the media processor 114 and trusted content 122 from secure processor 120 and thus causes viewable display array 102 to display non-trusted content and trusted content at locations which are controlled by the secure processor 120.

It is thus appreciated that in this way the locations at which non-trusted content is displayed are selected by the secure processor 120, without the secure processor 120 needing to have knowledge of the non-trusted display content. The locations at which non-trusted content are displayed are selected by the secure processor 120 to make it difficult or impossible for malicious content, forming part of the non-trusted display content, to be displayed. One example of such malicious content is a malicious prompt, such as "ENTER YOUR PIN", which could lead to entry of confidential information by a user on the keypad 106 or the touch panel 116 in a non-secure manner, enabling such confidential information to reach unauthorized entities.

The secure processor 120 preferably has two functions with respect to the display subsystem 110, in addition to whatever functions it may have in the point of sale device 102. These two functions include:
providing trusted content to the video switch 300 to be displayed by the viewable display array 102; and
controlling, by a control input to the video switch 300, at which locations the viewable display array 102 displays trusted content and at which locations the viewable display array 102 displays non-trusted content at any given time.

Accordingly, the secure processor 120 provides a trusted content video display output 122 to the video switch 300 and a non-trusted content control output 124 to the video switch 300, which controls the operation of the viewable display array 102, thereby controlling at which locations on the viewable display array 102, non-trusted content may be viewed by a user.

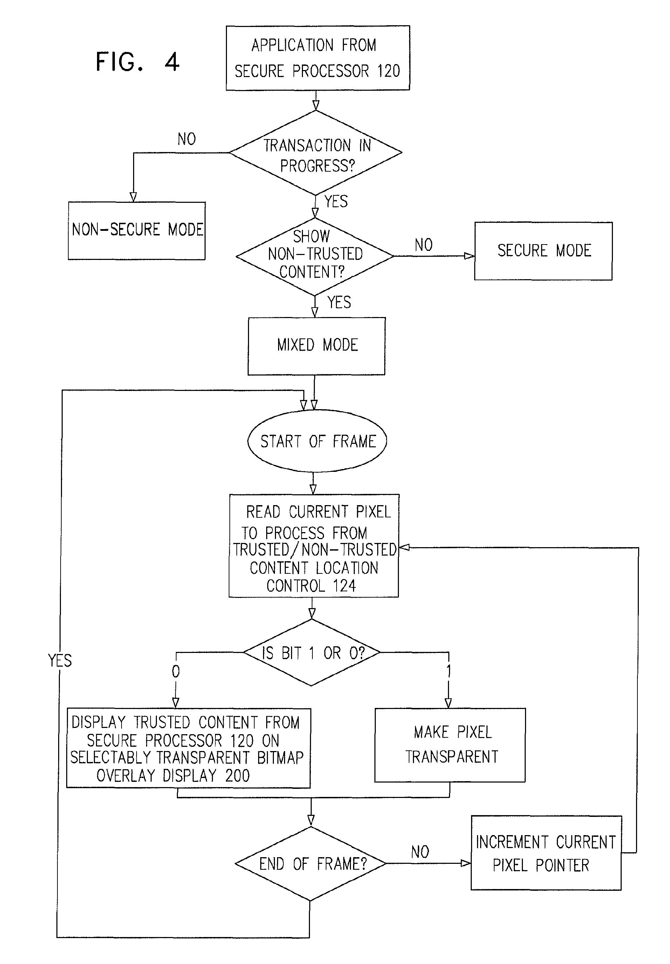

Reference is now made to Fig. 4, which is a simplified flowchart illustrating operation of the point of sale system of Fig. 2.

As seen in Fig. 4, the secure processor 120 inquires as to whether a payment transaction is in progress. If a payment transaction is not in progress, the selectably transparent bitmap overlay display 200 (Fig. 2) is caused to be transparent at all locations, thereby enabling non-trusted content to be viewed at all locations on the lower display array 201 lying thereunder. This mode of operation is herein termed the "non-secure mode". In the non-secure mode, all data input, whether via a touch panel or via a keyboard, is disabled or restricted. One example of restricted data input suitable for use in the non-secure mode is disallowing inputs including sequential entry of 3 digits or more.

If a payment transaction is in progress and there is no need to display non-trusted content, the selectably transparent bitmap overlay display 200 is caused to be effectively opaque, thereby preventing non-trusted content from being viewed at all locations on the lower display array 201 thereunder and displaying only trusted content on viewable display 102. This mode of operation is herein termed the "secure mode". In the secure mode, all data input, whether via a touch panel or via a keyboard, is preferably enabled.

If it is wished to display some non-trusted content while a transaction is in progress, the secure processor operates in a mixed-mode. In mixed-mode operation, the selectably transparent bitmap overlay display driver 202 receives instructions from the secure processor 120 for each pixel in each frame as to whether the corresponding pixel in the selectably transparent bitmap overlay display 200 is to be transparent or, alternatively, is to display trusted content.

In the mixed mode, data input, whether via a touch panel or via a keyboard, may be fully enabled or restricted but is preferably restricted. One example of restricted data input suitable for use in the mixed mode is disallowing inputs including sequential entry of 3 digits or more.

In an example shown in Fig. 4, for each frame, a control instruction, forming part of the non-trusted content location control output 124 (Fig. 2) from secure processor 120 is received at selectably transparent bitmap overlay display driver 202 for each pixel, typically in the form of a "1" or a "0". Typically, if the control instruction is a "1" the selectably transparent bitmap overlay display driver 202 causes the relevant pixel to be transparent, thereby enabling non-trusted content thereunder to be viewed, and if the control instruction is a "0", the selectably transparent bitmap overlay display driver 202 causes trusted content to be displayed at that pixel.

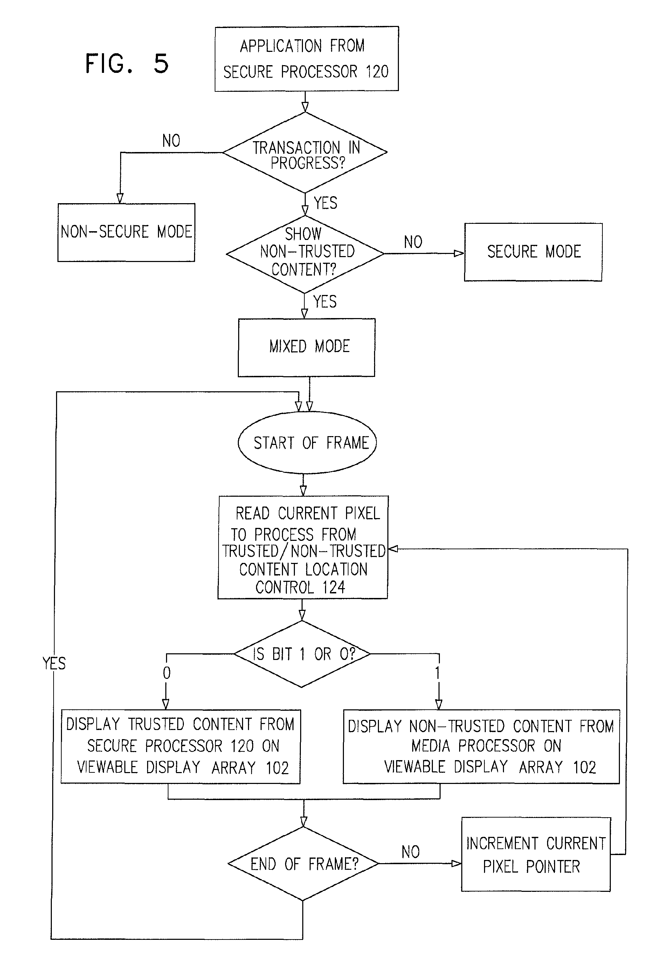

Reference is now made to Fig. 5, which is a simplified flowchart illustrating operation of the point of sale system of Fig. 3.

As seen in Fig. 5, the secure processor 120 inquires as to whether a payment transaction is in progress. If a payment transaction is not in progress, the video switch 300 is controlled by the secure processor 120 to cause the video switch-controlled driver 302 to display non-trusted content at all locations on the viewable display array 102. This mode of operation is herein termed the "non-secure mode". In the non-secure mode, all data input, whether via a touch panel or via a keyboard, is disabled or restricted. One example of restricted data input suitable for use in the non-secure mode is disallowing inputs including sequential entry of 3 digits or more.

If a payment transaction is in progress and there is no need to display non-trusted content, the video switch is controlled by the secure processor 120 to cause the video switch-controlled driver 302 to display only trusted content at all locations on the viewable display array 102.This mode of operation is herein termed the "secure mode". In the secure mode, all data input, whether via a touch panel or via a keyboard is preferably enabled.

If it is wished to display some non-trusted content while a transaction is in progress, the secure processor operates in a mixed-mode. In mixed-mode operation, the video switch 300 receives instructions from the secure processor 120 for each pixel in each frame as to whether the corresponding pixel is to display trusted content received from secure processor 120 or non-trusted content received from media processor 114.

In the mixed mode, data input, whether via a touch panel or via a keyboard, may be fully enabled or restricted and is preferably restricted. One example of restricted data input suitable for use in the mixed mode is disallowing inputs including sequential entry of 3 digits or more.

In an example shown in Fig. 5, for each frame, a control instruction, forming part of the non-trusted content location control output 124 (Fig. 3) from secure processor 120 is received at video switch 300 for each pixel, typically in the form of a "1" or a "0". Typically, if the control instruction is a "1" the video switch 300 causes the video switch-controlled driver 302 to cause the relevant pixel of viewable display array 102 to display non-trusted content and if the control instruction is a "0", the video switch 300 causes the video switch-controlled driver 302 to cause the relevant pixel of viewable array 102 to display trusted content to be displayed at that pixel.

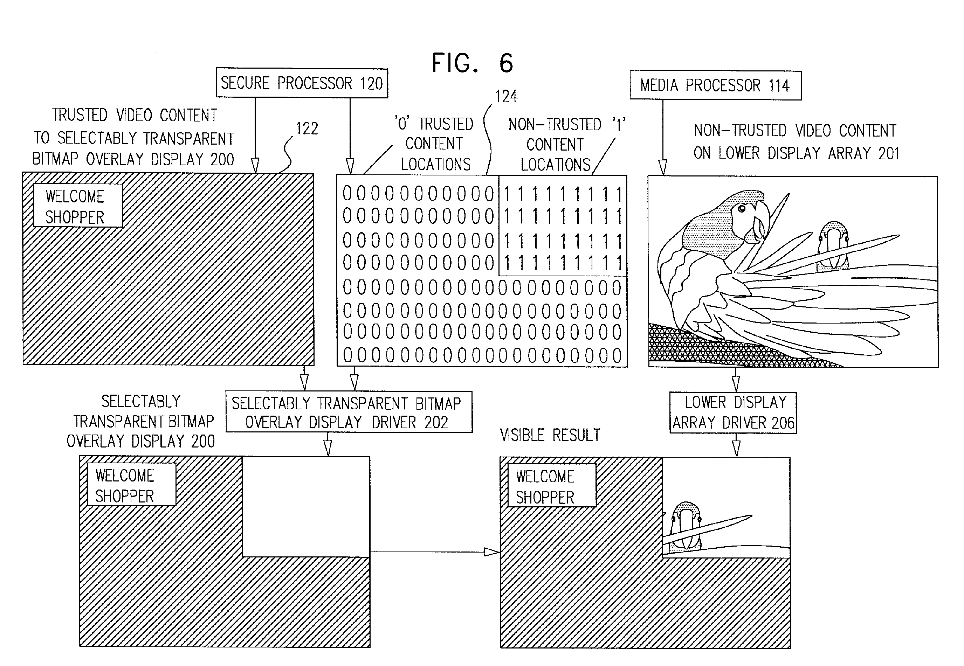

Reference is now made to Fig. 6, which is a simplified illustration of the generation of a displayed image in the embodiment of Figs. 2 and 4 in mixed-mode operation. As seen in Fig. 6, the secure processor 120 provides two outputs, a first output 122 to selectably transparent bitmap overlay display driver 202 containing trusted video content and a second output 124, also to selectably transparent bitmap overlay display driver 202, containing trusted/non-trusted content location control bits, typically 1s and 0s. The control bit 0 designates a pixel location in which the selectably transparent bitmap overlay display 200 is opaque and the control bit 1 designates a pixel location in which the selectably transparent bitmap overlay display 200 is transparent. At pixel locations where the selectably transparent bitmap upper display 200 is opaque, the lower display array 201 cannot be viewed. At pixel locations where the selectably transparent bitmap overlay display 200 is transparent, the lower display array 201 can be viewed.

As noted above, non-trusted content from media processor 114 is supplied to the lower display array 201. However, as shown at the bottom of Fig. 6, only the upper right hand corner of the non-trusted content on lower display array 201, which underlies the transparent pixel locations, designated by 1s on the upper display, can be viewed. The viewable remainder of the display is the trusted video display content supplied to the selectably transparent overlay display 200 by the secure processor 120.

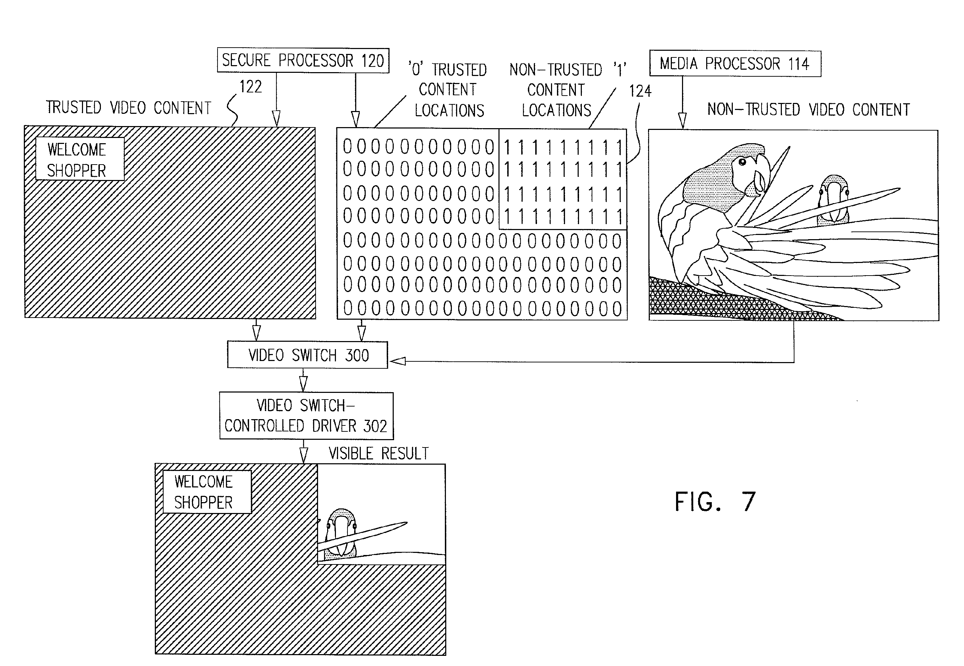

Reference is now made to Fig. 7, which is a simplified illustration of the generation of a displayed image in the embodiment of Figs. 3 and 5 in mixed-mode operation. As seen in Fig. 7, the secure processor 120 provides two outputs, a first output 122 to video switch 300 containing trusted video content and a second output 124, also to video switch 300, containing non-trusted and trusted content location control bits, typically 1s and 0s. The control bit 0 designates a pixel location in which the video switch 300 enables only trusted content to be displayed and the control bit 1 designates a pixel location in which the video switch enables non-trusted content to be displayed.

As noted above, non-trusted content from media processor 114 is also supplied to the video switch 300. In the illustrated embodiment of Fig. 7, it is seen that only the upper right hand corner of the non-trusted content supplied by media processor 114 is displayed. The viewable remainder of the viewable display array 102 is trusted video display content supplied by secure processor 120.

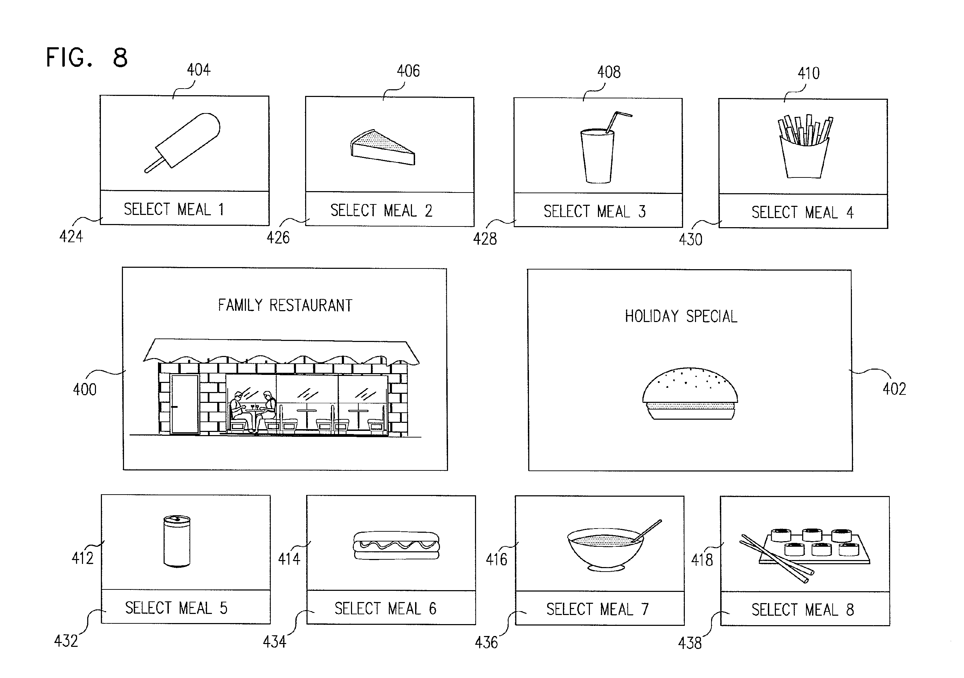

Reference is now made to Fig. 8, which is a simplified illustration of an exemplary display screen produced by the system and method of a preferred embodiment of the present invention in mixed-mode operation. As seen in Fig. 8, the display screen includes a plurality of relatively large display areas, typically two in number and here designated by reference numerals 400 and 402. The display screen also typically includes a plurality of relatively small display areas, typically eight in number and here designated by reference numerals 404, 406, 408, 410, 412, 414, 416 and 418.

It is a particular feature of an embodiment of the present invention that the relatively small display areas 404 - 418 are sized and positioned such that they are practically incapable of enabling malicious content, forming part of said non-secure display content, to be displayed thereon, which could lead to unauthorized entry of confidential information by a user.

In one example, the sizes of the small display areas may be so small as to eliminate the practical possibility of there being display thereon a readable malicious message, such as ENTER YOUR PIN.

In another example, which may be advantageously combined with the preceding example, the configuration and placement of the small display areas may be such that an attempt to display a malicious message would appear to most people as being unauthorized.

As a further example, which may be advantageously combined with either or both of the preceding examples, any one or more of the number, size, order, appearance and arrangement of the small display areas is such that any attempt to make them appear similar to a keypad would appear to most people as being unauthorized.

In accordance with an embodiment of the present invention, touch screen input areas, here designated by reference numerals 424, 426, 428, 430, 432, 434, 436 and 438, also referred to as "hot spots", may be provided in association with the display.

In one example, the number of such touch screen input areas is less than 10, as in the illustrated embodiment, such that the touch screen input areas cannot be employed maliciously as a keypad.

In another example, which may be advantageously combined with the preceding example, the configuration and placement of the touch screen input areas 424, 426, 428, 430, 432, 434, 436 and 438 is such that that the touch screen input areas cannot be employed maliciously as a keypad.

In a further example, the number and configuration of the touch screen input areas enables them to be used as a keypad, but preferably the operation thereof is controlled by a secure processor, for example to limit the number of sequential numerical digits to three.

The touch screen input areas may be located partially or fully overlying display areas which can only display trusted content, wherein the legends, SELECT MEAL 1, SELECT MEAL 2 etc. are under the control of the secure processor 120. Alternatively, the touch screen input areas may be located partially or fully overlying display areas which can display non-trusted content.

The touch screen input areas may be larger than the corresponding display areas.

Four exemplary use cases are now described to illustrate the versatility of the system:

I. The hot spots 424 - 438 overlie display areas on which only trusted content can be displayed. The hot spots 424 - 438 may lie adjacent display areas 404 - 418 on which non-trusted content may be displayed.

II. The hot spots 424 - 438 overlie display areas on which non-trusted content may be displayed. Preferably, in this use case, any one or more of the number, size, order, appearance and arrangement of the hot spots is such that the hot spots cannot be employed maliciously as a keypad.

III. The large display areas 400 and 402 could be restricted to the display of trusted content only. The large display areas 400 and 402 preferably do not overlie hot spots.

IV. The areas designated by reference numerals 424, 426, 428, 430, 432, 434, 436 and 438 are not hot spots and are areas in which non-trusted content may be displayed.

It will be appreciated by persons skilled in the art that the present invention is not limited by what has been particularly shown and described hereinabove. Rather the scope of the present invention includes both combinations and subcombinations of various features described and shown above as well as modifications thereto which would occur to persons skilled in the art upon reading the foregoing and which are not in the prior art.

## Claims

1. A point of sale system comprising:
a display subsystem including a viewable display array having multiple controllable display locations being operative to display non-trusted display content and trusted display content;
a secure payment interaction subsystem operative to securely process payment transaction data and including data input functionality and secure processing functionality, said display subsystem cooperating with said secure payment interaction subsystem; and
a trusted/non-trusted display content controller operative to govern operation of said display subsystem and thereby to selectably allow a portion of said non-trusted display content from a non-trusted display content source to be viewed, at at least one display location on said viewable display array, said trusted/non-trusted display content controller also providing said secure processing functionality,
wherein said trusted/non-trusted display content controller operates in at least two of the following three distinct modes of operation:
a secure mode of operation in which said non-trusted display content does not appear on said viewable display array;
a non-secure mode of operation in which said non-trusted display content appears on said display and said data input functionality is disabled; and
a mixed mode of operation in which both said trusted display content and said non-trusted display content appear on said viewable display array at locations controlled by said trusted/non-trusted display content controller.

2. A point of sale system according to claim 1 and wherein said viewable display array has touch screen functionality and said at least one display location is incapable of enabling a keypad to be displayed thereon in at least said mixed mode.

3. A point of sale system according to claim 1 and wherein said viewable display array has PINpad touch screen functionality and said at least one display location is incapable of enabling a keypad to be displayed thereon in at least said mixed mode.

4. A point of sale system according to claim 1 and wherein said viewable display array has touch screen functionality and said at least one display location is incapable of enabling a keypad to be displayed thereon.

5. A point of sale system according to claim 4 and wherein said touch screen functionality includes PINpad functionality.

6. A point of sale system according to claim 1 and wherein said trusted/non-trusted display content controller decides at multiple times whether trusted or non-trusted content is to be displayed at every location on said viewable display array at said multiple times.

7. A point of sale system according to claim 1 and wherein said viewable display array comprises a lower display array and a selectably transparent bitmap overlay overlying said lower display array, said selectably transparent bitmap overlay being under the control of said trusted/non-trusted display content controller and being operative to prevent locations on said viewable display array, other than at least one location selected by said trusted/non-trusted display content controller, from being viewed.

8. A point of sale system according to claim 1 and wherein:
said display subsystem includes switching functionality, receiving said trusted display content for display from said trusted/non-trusted display content controller and receiving non-trusted display content for display from said non-trusted display content source and providing a feed to said viewable display array; and
said trusted/non-trusted display content controller includes control functionality providing a control input which controls the content to be displayed at said multiple controllable display locations on said viewable display array, said control functionality being operative to decide whether trusted or non-trusted content is to be displayed at every one of said multiple controllable display locations at any given time.

9. A point of sale system comprising:
a display subsystem including a viewable display array having multiple controllable display locations being operative to display non-trusted display content and trusted display content; and
a trusted/non-trusted display content controller operative to govern operation of said display subsystem and thereby to selectably allow a portion of said non-trusted display content from a non-trusted display content source to be viewed at at least one display location on said viewable display array,
said display subsystem including switching functionality, receiving said trusted display content for display from said trusted/non-trusted display content controller and receiving non-trusted display content for display from said non-trusted display content source and providing a feed to said viewable display array; and
said trusted/non-trusted display content controller including control functionality providing a control input which controls the content to be displayed at said multiple controllable display locations on said viewable display array, said control functionality being operative to decide whether trusted or non-trusted content is to be displayed at every one of said multiple controllable display locations at any given time.

10. A point of sale system according to claim 9 and also comprising a secure payment interaction subsystem operative to securely process payment transaction data and including data input functionality and secure processing functionality and wherein said display subsystem cooperates with said secure payment interaction subsystem.

11. A point of sale system according to claim 10 and wherein said trusted/non-trusted display content controller also provides said secure processing functionality.

12. A point of sale system according to claim 9 and wherein said viewable display array has touch screen functionality and said at least one display location is incapable of enabling a keypad to be displayed thereon.

13. A point of sale system according to claim 12 and wherein said touch screen functionality includes PINpad functionality.

14. A point of sale system according to claim 9 and wherein said viewable display array has touch screen functionality and said trusted/non-trusted display content controller operates in at least two of the following three distinct modes of operation:
a secure mode of operation in which said non-trusted display content does not appear on said viewable display array;
a non-secure mode of operation in which said non-trusted display content appears on said viewable display array and said touch screen functionality of said viewable display array is disabled; and
a mixed mode of operation in which both said trusted display content and said non-trusted display content appears on said viewable display array at locations controlled by said trusted/non-trusted display content controller.

15. A point of sale system according to claim 9 and wherein:
said display subsystem includes a video switch receiving said trusted display content for display from said trusted/non-trusted display content controller and receiving non-trusted display content for display from said non-trusted display content source and providing a feed to said viewable display array; and
said trusted/non-trusted display content controller provides a video switch control input to said video switch which controls the content to be displayed at said multiple controllable display locations on said viewable display array, said trusted/non-trusted display content controller being operative to decide whether trusted or non-trusted content is to be displayed at every one of said multiple controllable display locations at any given time.
